# NEW EUROPEAN PATENT SPECIFICATION

(11) **EP 0 325 352 B2**
(45) Date of publication and mention of the opposition decision: **13.12.1995**
(45) Mention of the grant of the patent: 07.04.1993
(21) Application number: 89300170.1
(22) Date of filing: 10.01.1989
(51) Int. Cl.: B60N 2/26

(54) **Child's safety seat**
Kinder-Sicherheitssitz
Siège de sécurité pour enfant

(30) Priority: 16.01.1988 GB 8800964
(43) Date of publication of application: 26.07.1989
(73) Proprietor: BRITAX RÖMER Kindersicherheit GmbH, D-89077 Ulm (DE)
(72) Inventor: Laessle, Edwin, D-7907 Laupheim (DE); Claus, Georg, D-7900 Ulm-Wiblingen (DE); Wetter, Hermann, D-7900 Ulm (DE); Stysch, Christian, D-7900 Donau (DE)
(74) Representative: Hollinghurst, Antony

(56) References cited:
- EP-A- 0 116 965
- EP-A- 0 181 499
- EP-A- 0 195 123
- EP-A- 0 228 158
- DE-A- 2 221 489
- US-A- 3 645 548

## Description

This invention relates to a child's safety seat of the type comprising a support member having a base portion adapted to rest on a substantially horizontal surface and a back portion extending upwardly from the base portion, a seat member, pivot means on the upper end of the back portion of the support member engaging in an elongate slot in the seat member, and coupling means connecting the seat member to the base portion of the support member so as to secure the seat member in a selected orientation relative to the support member, the coupling means comprising a guide follower secured to the support member and engaging in a guide track on the seat member, a series of open-ended detent slots in the seat member spaced apart from one another in the direction of movement of the guide follower along the guide track, and a locking member mounted on the support member for selective engagement with said detent slots to secure the seat member in said selected orientation. A seat of this type is disclosed in EP-A-0 228 158.

According to the invention, in a safety seat of this type, the pivot means on the upper end of the back portion of the support member comprises a pivot pin secured to the back portion of the support member, the guide follower is secured to the front end of the base portion of the support member, the guide track extends along the bottom of the seat member, and the locking member is separate from the guide follower, has a pair of locking studs spaced apart so as to be engageable in adjacent detent slots, and is mounted on the support member in guide means permitting translational movement of the locking member towards and away from the detent slots and rotational movement about an axis located between the locking studs.

Two embodiments of the invention will now be described, by way of example, with reference to the accompanying drawings in which:
Figure 1 is a side view of a child's safety seat in accordance with the invention at one end of the range of adjustment of the orientation of the seat member relative to the support member;
Figure 2 is a side view of the seat shown in Figure 1 but at the opposite end of the range of adjustment;
Figure 3 is a fragmentary side view on an enlarged scale of the locking mechanism of the seat shown in Figure 1;
Figure 4 is a cross-sectional view taken on the line 4 - 4 in Figure 3;
Figure 5 is a fragmentary side view, similar to Figure 3, of a modified embodiment of the invention; and
Figure 6 is a cross-sectional view taken on the line 6 - 6 in Figure 5.

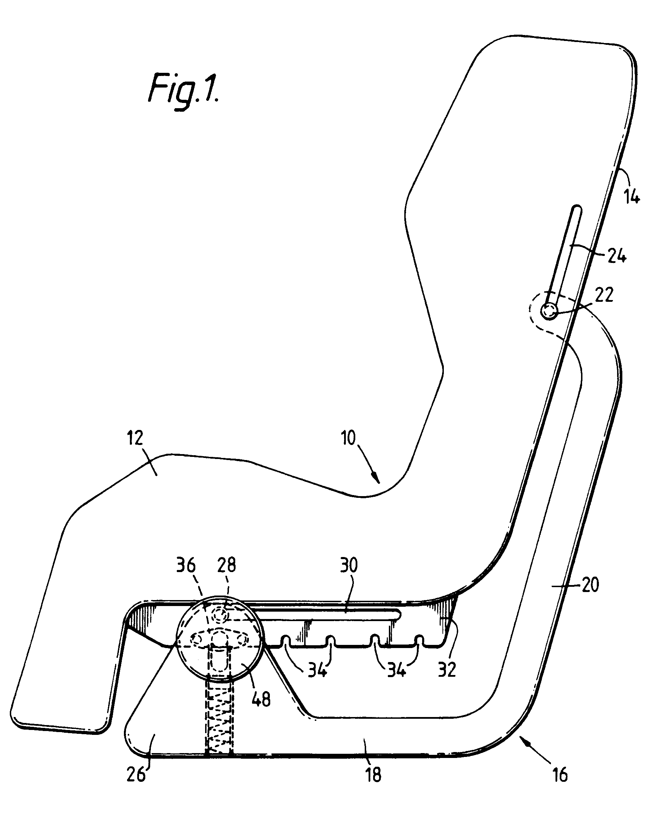

Referring to Figure 1, a child's safety seat consists of a seat body 10 having a seat portion 12 and a back rest portion 14. The seat body 10 is mounted on an L-shaped support member 16 having a base limb 18 and an upwardly extending back limb 20.

The upper end of the back limb 20 of the support member 16 is bent forwardly and carries a transverse pin 22 which engages in a slot 24 in the back portion 14 of the seat body 10, the slot 24 extending substantially parallel to the back rest thereof. A generally triangular projection 26 is formed integrally with the front end of the base limb 18 and carries a transverse pin 28 which engages in a slot 30 formed in a flange 32 secured to the bottom surface of the seat portion 12.

It should be appreciated that a similar pin to the pin 22 projects from the opposite side of the back limb 20 into engagement with a similar slot to the slot 24 on the other side of the seat body 10, and that a similar pin to the pin 28 projects from another triangular projection on the other side of the base limb 18 into engagement with a slot similar to the slot 30 in another flange similar to the flange 32 on the other side of the bottom of the seat portion 12. The seat body 10 is thus supported on the support member 16 at four locations.

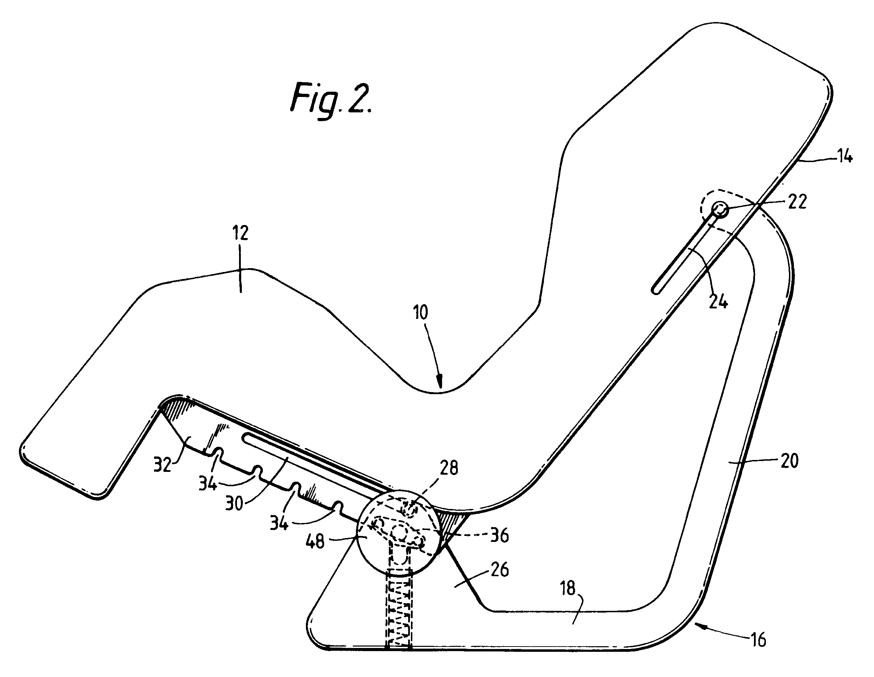

In Figure 1 the pin 28 is shown at the front end of the slot 30 and the pin 22 at the bottom end of the slot 24. The seat body 10 is in its most upright position. Referring to Figure 2, the seat body 10 can be moved relative to the support member 16 to bring the pins 22 and 28 to the opposite ends of their respective slots 24 and 30, putting the seat body 10 in its fully reclined position. The seat body 10 takes up a succession of intermediate positions as the pins 22 and 28 move along their respective slots 24 and 30.

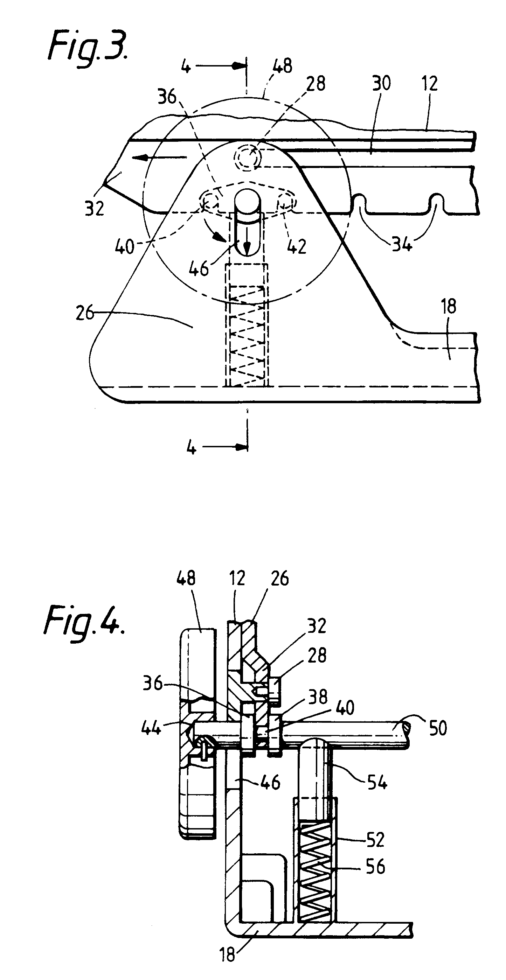

In order to secure the seat body in a desired position, a row of six uniformly spaced open-ended detent slots 34 are formed in the bottom edge of the flange 32. As can best be seen in Figures 3 and 4, a pair of locking plates 36 and 38 are located on opposite sides of the flange 32 and interconnected by a pair of locking studs 40 and 42 which are spaced apart so as to simultaneously engage in adjacent detent slots 34. A stub axle 44 is secured fast with the locking plate 36 so as to project outwardly through a substantially vertical guide slot 46 in the triangular projection 26 and carries a control knob 48 on its outer end.

Co-axially with the stub axle 44, a control rod 50 extends from the other locking plate 38 under the seat body 10 to the other side of the support member 16, where it is secured to a similar locking mechanism (not shown) which engages with the above-mentioned flange corresponding to the flange 32. The common axis of the control rod 50 and the stub axle 44 is located half way between the two locking studs 40 and 42.

A vertically extending cylindrical housing 52, secured to the base limb 18 of the support member 16, contains a plunger 54 which is upwardly biased by a compression spring 56 so as to engage with the control rod 50, thereby to urge the stub axle 44 to the top of the guide slot 46.

When the mechanism is in the position shown in Figures 1, 3 and 4, the engagement of the two locking studs 40 and 42 in the front two detent slots 34 in the flange 32 prevent movement of the seat body 10 relative to the support member 16. If the knob 48 is turned in the counter-clockwise direction, as viewed in Figures 1 and 3, the locking plates 36 and 38 pivot on the locking pin 42 nearer to the rear of the flange 32, so that the other locking pin 40 moves out of engagement with the front detent slot 34 and the stub axle 44 moves downwardly in the guide slot 46.

Continued rotation of the knob 48 brings the locking pin 40 into engagement with the third of the detent slots 34 from the front. The seat 10 is now secured in its next stable position, the compression spring 56 rendering unstable any intermediate position in which one or other of the locking pins 40 and 42 is out of engagement with any of the slots 34. Continued rotation of the knob 48 causes the seat body 10 to take up successive positions of increasing inclination until the stud 42 is received in the rearmost detent slot 34, as shown in Figure 2. Rotation of the knob 48 in the clockwise direction, as viewed in Figures 1, 2, and 3, moves the seat body 10 to a more upright position.

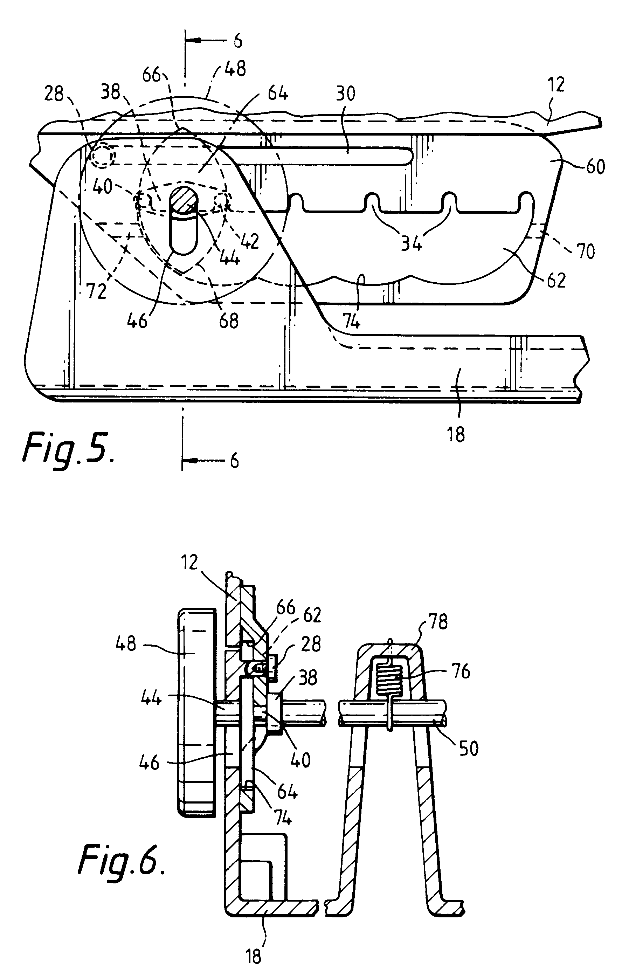

Figures 5 and 6 illustrate a modified embodiment of the invention in which parts identical with corresponding parts of the embodiments shown in Figures 3 and 4 are denoted by the same reference numerals and will not be described again in detail. The flange 32 is replaced by a much deeper flange 60 containing an elongate opening 62 near its bottom edge. The open-ended detent slots 34 are formed along the upper edge of the opening 62. The outer locking plate 36 of Figures 1 to 4 is replaced by an enlarged locking plate 64 having two cam lobes 66 and 68 extending in opposite directions perpendicular to the line joining the locking studs 40 and 42. The flange 60 has a step formation 70, 72, arranged to position the lower edge 74 of the opening 62 in alignment with the locking plate 64. The lower edge 74 of the opening 62 is in the shape of a complementary cam formation such as to remain in constant engagement with the periphery of the locking plate 64 formed by the cam lobes 66 and 68. The cam lobes 66 and 68 thus prevent downward movement of the stub axle 44 except in conjunction with rotational movement thereof, thereby ensuring that at least one of the locking studs 40 and 42 is in engagement with one of the detent slots 34 at all times. The pin 28 and slot 30 are not essential but their presence is preferable since they reduce friction by holding the cam lobes 66 and 68 out of engagement with the lower edge 74 except when an attempt is made to move both locking studs 40 and 42 out of their respective detent slots 34 simultaneously.

The compression spring 56 of Figures 1 to 4 is replaced by a tension spring 76 which extends between the control rod 50 and a saddle formation 78 projecting upwardly from the base limb 18.

The compression spring 56 of Figures 1 to 4 may be used with the embodiment of Figures 5 and 6 and the tension spring 76 of Figures 5 and 6 may be used with the embodiment of Figures 1 to 4.

## Claims

1. A child's safety seat comprising a support member (16) having a base portion (18) adapted to rest on a substantially horizontal surface and a back portion (20) extending upwardly from the base portion (18), a seat member (10), pivot means on the upper end of the back portion (20) of the support member (16) engaging in an elongate slot (24) in the seat member (10), and coupling means connecting the seat member (10) to the base portion (18) of the support member (16) so as to secure the seat member (10) in a selected orientation relative to the support member (16), the coupling means comprising a guide follower (28, 66, 68) secured to the support member (16) and engaging in a guide track (30, 62) on the seat member (10), a series of open-ended detent slots (34) in the seat member (10) spaced apart from one another in the direction of movement of the guide follower (28, 66, 68) along the guide track (30, 62), and a locking member (36, 64) mounted on the support member (16) for selective engagement with said detent slots (34) to secure the seat member (10) in said selected orientation, characterised in that
the pivot means on the upper end of the back portion (20) of the support-member (16) comprises a pivot pin (22) secured to the back portion (20) of the support member (16),
the guide follower (28, 66, 68) is secured to the front end of the base portion (18) of the support member (16),
the guide track (30, 62) extends along the bottom of the seat member (10), and
the locking member (36, 64) is separate from the guide follower (28, 66, 68), has a pair of locking studs (40, 42) spaced apart so as to be engageable in adjacent detent slots (34), and is mounted on the support member (16) in guide means (46) permitting translational movement of the locking member (36, 64) towards and away from the detent slots (34) and rotational movement about an axis (50) located between the locking studs (40, 42).

2. A child's safety seat according to claim 1, wherein the locking member (36) is resiliently biased towards the detent slots (34).

3. A child's safety seat according to claim 1 or 2, wherein the guide follower comprises a second pin (28) secured to the front end of the base portion (18) of the support member (16) and the guide track comprises a second slot (30) extending along the bottom of the seat member (10).

4. A child's safety seat according to claim 1, 2 or 3, wherein the guide means (46) is arranged to permit translational movement of the locking member (36) through a distance equal to the distance of the axis of rotation (50) thereof from each locking stud (40, 42) so as to allow pivotal movement of the locking member (36) about one of the studs (40, 42) as such stud remains engaged in one of the detent slots (34) as the other of the studs (40, 42) moves between the adjacent detent slot (34) on one side of said one detent slot (34) to the adjacent detent slot (34) on the other side of said one detent slot (34).

5. A child's safety seat according to claim 4, wherein the guide follower comprises a cam (66, 68) secured to the locking member (64) and the guide track comprises an opening (62) formed in the base portion (18) with the detent slots (34) in its upper edge and a cam profile (74) on its lower edge shaped so that, at all times, at least one of the studs (40, 42) is engaged in a detent slot (34).

## Patentansprüche

1. Kinder-Sicherheitssitz, umfassend ein Trägerelement (16) mit einem Basisteil (18), welches auf einer etwa horizontalen Fläche zu ruhen vermag, und einem Rückenteil (20), welches sich von dem Basisteil (18) nach oben erstreckt, ein Sitzelement (10), eine Schwenkeinrichtung am oberen Ende des Rückenteiles (20) des Trägerelements (16), die in einen Längsschlitz (24) in dem Sitzelement (10) eingreift, und eine Kupplungseinrichtung, welche das Sitzelement (10) mit dem Basisteil (18) des Trägerelements (16) verbindet, um das Sitzelement (10) in einer ausgewählten Orientierung bezüglich des Trägerelements (16) zu fixieren, wobei die Kupplungseinrichtung ein Führungs-Folgeglied (28, 66, 68) aufweist, welches an dem Trägerelement (16) fixiert ist und in eine Führungsspur (30, 62) an dem Sitzelement (10) eingreift, eine Reihe von offenendigen Rastschlitzen (34) in dem Sitzelement (10) voneinander in Bewegungsrichtung des Führungs-Folgegliedes (28, 66, 68) entlang der Führungsspur (30, 62) beabstandet ist, und ein Verriegelungselement (36, 64) an dem Trägerelement (16) für den selektiven Eingriff mit den Rastschlitzen (34) gelagert ist, um das Sitzelement (10) in der ausgewählten Orientierung zu fixieren,
**dadurch gekennzeichnet,** daß
die Schwenkeinrichtung an dem oberen Ende des Rückenteils (20) des Trägerelements (16) einen an dem Rückenteil (20) des Trägerelements (16) fixierten Schwenkstift (22) aufweist,
das Führungs-Folgeglied (28, 66, 68) am vorderen Ende des Basisteils (18) des Trägerelements (16) fixiert ist,
die Führungsspur (30, 62) sich entlang dem Boden des Sitzelements (10) erstreckt, und
das Verriegelungselement (36, 64) von dem Führungs-Folgeglied (28, 66,68) getrennt ist, ein Paar Verriegelungszapfen (40, 42) aufweist, die voneinander beabstandet sind, um in benachbarte Rastschlitze (34) einzugreifen, und an dem Trägerelement (16) in einer Führungseinrichtung (46) gelagert ist, die eine translatorische Bewegung des Verriegelungselementes (36, 64) in Richtung auf die Rastschlitze (34) und von diesen fort sowie eine Drehbewegung um eine zwischen den Verriegelungszapfen (40, 42) gelegene Achse (50) ermöglicht.

2. Kinder-Sicherheitssitz nach Anspruch 1, bei dem das Verriegelungselement (36) in Richtung auf die Rastschlitze (34) federnd vorgespannt ist.

3. Kinder-Sicherheitssitz nach Anspruch 1 oder 2, bei dem das Führungs-Folgeglied einen zweiten Stift (28) aufweist, der an dem vorderen Ende des Basisteils (18) des Trägerelements (16) fixiert ist, während die Führungsspur einen zweiten Schlitz (30) aufweist, der sich entlang dem Boden des Sitzelements (10) erstreckt.

4. Kinder-Sicherheitssitz nach Anspruch 1, 2 oder 3, bei dem die Führungseinrichtung (46) derart ausgebildet ist, daß sie eine translatorische Bewegung des Verriegelungselementes (36) über eine Entfernung ermöglicht, die gleich der Entfernung von dessen Drehachse (50) von jedem Verriegelungszapfen (40, 42) ist, um eine Drehbewegung des Verriegelungselements (36) um einen der Zapfen (40, 42) zu gestatten, wobei dieser Zapfen mit einem der Rastschlitze (34) in Eingriff verbleibt, während der andere Zapfen (40, 42) sich zwischen dem benachbarten Rastschlitz (34) auf der einen Seite des genannten einen Rastschlitzes (34) zu dem benachbarten Rastschlitz (34) auf der anderen Seite des genannten einen Rastschlitzes (34) bewegt.

5. Kinder-Sicherheitssitz nach Anspruch 4, bei dem das Führungs-Folgeglied aufweist:
ein Steuernockenteil (66, 68), welches an dem Verriegelungselement (64) fixiert ist, während die Führungsspur eine in dem Basisabschnitt (18) ausgebildete Öffnung (62) mit Rastschlitzen (34) in ihrer oberen Kante und einem Steuerkurvenprofil (74) an ihrer unteren Kante aufweist, wobei das Steuerkurvenprofil derart ausgebildet ist, daß zu jeder Zeit mindestens einer der Zapfen (40, 42) in Eingriff mit einem Rastschlitz (34) steht.

## Revendications

1. Siège de sécurité pour enfant comportant un organe de support (16) ayant une partie de base (18) adaptée de façon à reposer sur une surface essentiellement horizontale et une partie dossier (20) s'étendant vers le haut depuis la partie de base (18), un organe de siège (10), un moyen de pivot sur l'extrémité supérieure de la partie dossier (20) de l'organe de support (16) s'engageant dans une fente longitudinale (24) dans l'organe de siège (10), et des moyens de couplage reliant l'organe de siège (10) à la partie de base (18) de l'organe de support (16) de façon à fixer l'organe de siège (10) dans une orientation sélectionnée par rapport à l'organe de support (16), les moyens de couplage comportant un galet guide (28, 66, 68) fixé à l'organe de support (16) et s'engageant dans une piste de guidage (30, 62) sur l'organe de siège (10), une série de fentes d'arrêt (34) ouvertes à une extrémité dans l'organe de siège (10) espacées les unes des autres dans la direction du mouvement du galet guide (28, 66, 68) le long de la piste de guidage (30, 62), et un organe de blocage (36, 64) monté sur l'organe de support (16) pour l'engagement sélectif dans lesdites fentes d'arrêt (34) afin de fixer l'organe de siège (10) dans ladite orientation sélectionnée, caractérisé en ce que
le moyen de pivot sur l'extrémité supérieure de la partie dossier (20) de l'organe de support (16) comporte une goupille de pivotement (22) fixée à la partie dossier (20) de l'organe de support (16),
le galet guide (28, 66, 68) est fixé à l'extrémité avant de la partie de base (18) de l'organe de support (16),
la piste de guidage (30, 62) s'étend le long du bas de l'organe de siège (10), et
l'organe de blocage (36, 64) est distinct du galet guide (28, 66, 68), il présente une paire de goujons de blocage (40, 42) espacés de façon à pouvoir s'engager dans des fentes d'arrêt adjacentes (34), et est monté sur l'organe de support (16) dans des moyens de guidage (46) permettant un mouvement de translation de l'organe de blocage (36, 64) vers et depuis les fentes d'arrêt (34) et un mouvement de rotation autour d'un axe (50) situé entre les goujons de blocage (40, 42).

2. Siège de sécurité pour enfant suivant la revendication 1, dans lequel l'organe de blocage (36) est poussé de façon élastique vers les fentes d'arrêt (34).

3. Siège de sécurité pour enfant suivant la revendication 1 ou 2, dans lequel le galet guide comporte une deuxième goupille (28) fixée à l'extrémité avant de la partie de base (18) de l'organe de support (16), et la piste de guidage comporte une deuxième fente (30) s'étendant le long du bas de l'organe de siège (10).

4. Siège de sécurité pour enfant suivant la revendication 1, 2 ou 3, dans lequel les moyens de guidage (46) sont disposés de façon à permettre un mouvement de translation de l'organe de blocage (36) sur une distance égale à la distance à l'axe de rotation (50) de cet organe depuis chaque goujon de blocage (40, 42), de façon à permettre un mouvement de pivotement de l'organe de blocage (36) autour de l'un des goujons (40, 42), ce goujon restant engagé dans l'une des fentes d'arrêt (34) tandis que l'autre de ces goujons (40, 42) se déplace entre la fente d'arrêt adjacente (34) d'un côté de ladite fente d'arrêt (34) vers la fente d'arrêt adjacente (34) de l'autre côté de ladite fente d'arrêt (34).

5. Siège de sécurité pour enfant suivant la revendication 4, dans lequel le galet guide comporte une came (66, 68) fixée à l'organe de blocage (64) et la piste de guidage comporte une ouverture (62) formée dans la partie de base (18) ayant les fentes d'arrêt (34) à son bord supérieur et un profile de came (74) à son bord inférieur, cette came étant profilée de telle sorte qu'à tout moment, au moins l'un des goujons (40, 42) est engagé dans une fente d'arrêt (34).
